# EUROPÄISCHE PATENTSCHRIFT

(11) **EP 0 928 513 B1**
(45) Veröffentlichungstag und Bekanntmachung des Hinweises auf die Patenterteilung: **24.01.2001**
(21) Anmeldenummer: 97938881.6
(22) Anmeldetag: 06.08.1997
(51) Int. Cl.: H02K 17/02, B60L 11/18, B60K 1/00

(54) **FAHRZEUG MIT ELEKTRISCHEM ANTRIEBSMOTOR**
VEHICLE WITH ELECTRONIC DRIVING ENGINE
VEHICULE AVEC UN MOTEUR D'ENTRAINEMENT ELECTRIQUE

(30) Priorität: 28.09.1996 DE 29616977 U
(43) Veröffentlichungstag der Anmeldung: 14.07.1999
(73) Patentinhaber: Clark Material Handling GmbH, 45478 Mülheim an der Ruhr (DE)
(72) Erfinder: LEWALDER, Karl, Heinz, D-40627 Düsseldorf (DE)
(74) Vertreter: Stark, Walter, Dr.-Ing.
(86) Internationale Anmeldenummer: EP9704285
(87) Internationale Veröffentlichungsnummer: WO9813926

(56) Entgegenhaltungen:
- DE-A- 4 410 074
- US-A- 4 538 100
- R. RICHTER: "LEHRBUCH DER WICKLUNGEN ELEKTRISCHER MASCHINEN" 1952 , VERLAG G. BRAUN , KARLSRUHE XP002049868 siehe Seite 144 - Seite 152; Tabelle 7
- H. JORDAN, V. KLIMA, K.P. KOVACS: "ASYNCHRONMASCHINEN" 1975 , VIEWEG , BRAUNSCHWEIG XP002049869 siehe Seite 101 - Seite 111; Abbildung 26; Beispiel 2
- T. BÖDEFELD, H. SEQUENZ: "ELEKTRISCHE MASCHINEN" 1965 , SPRINGER VERLAG , WIEN XP002049870 siehe Seite 191 - Seite 193; Abbildung 4.2 siehe Seite 174

## Beschreibung

Die Erfindung betrifft ein Fahrzeug mit elektrischem Antriebsmotor und einer Stromquelle, insbesondere als Flurförderzeug, mit einer Stromquellenspannung von weniger als 96 Volt, wobei der Antriebsmotor ein Asynchronmotor mit einem Rotor mit Rotorblechen und einem Stator mit Ständerblechen ist und mehr als vier Pole hat.

Aus der Praxis sind Elektrofahrzeuge bekannt, die üblicherweise mit einem Gleichstromfahrmotor angetrieben werden. Aufgrund von Wartungsfreiheit und größerer thermischer Belastbarkeit zielen neuere Entwicklungen auf einen bürstenlosen Fahrmotor, speziell in asynchroner Ausführung, hin. Üblicherweise werden solche Motoren in vieroder sechspoliger Ausführung verwendet und weisen maximal 54 Nuten im Ständerblech auf. Sie werden im Kleinspannungsbereich betrieben, d. h. der Effektivwert der Motorspannung beträgt ungefähr 70 Volt Wechselspannung.

Aus der US 4 538 100 ist ein Geschwindigkeitsregelungsanordnung für ein elektrisch betriebenes Fahrzeug bekannt, das mit Gleichstrom betrieben wird. Als Antriebsmotor weist das Fahrzeug einen Wechselstrom-Induktionsmotor auf. Der allgemeine Aufbau und die Wirkungsweise von Induktionsmotoren sowie die Wicklung solcher Induktionsmotoren sind aus "Elektrische Maschinen", Springer-Verlag und aus "Lehrbuch der Wicklungen elektrischer Maschinen", Verlag G. Braun bekannt. Die DE 44 10 074 A1 offenbart eine Antriebsachse mit einem in einem Achsgehäuse angeordneten Differentialgetriebe.

Aufgabe der Erfindung ist es, einen elektrischen Antriebsmotor für Fahrzeuge, insbesondere Flurförderzeuge, zu schaffen, der wartungsfrei ist, eine größere thermische Belastbarkeit aufweist und eine geringe Baugröße hat.

Diese Aufgabe wird dadurch gelöst, daß der Antriebsmotor mehr als 54 Nuten im Ständerblech aufweist und der Effektivwert der Motorspannung geringer als 60 Volt Wechselspannung ist und daß der Antriebsmotor phasenüberlappend in zwei Schichten gewickelt ist und einen verkürzten Wickelschritt aufweist, so daß die Abgrenzung zwischen den verschiedenen Polen nicht als hartdefinierte Polkante ausgebildet ist, sondern ein stufiger Übergang entsteht, was eine deutliche Geräuschverminderung bewirkt.

Vorzugsweise können die Nuten des Antriebsmotors im Rotorblech tropfenförmig und wenigstens stromverdrängungsarm sein, wobei die dicke Tropfenseite der Außenseite des Rotorbleches zugewandt ist, so daß eine möglichst große Anzahl von Wicklungen sich in einem Bereich nahe des Spaltes zwischen Ständerblech und Rotorblech befinden.

Weiterhin können die Nuten im Ständerblech des Antriebsmotors tropfenförmig und wenigstens stromverdrängungsarm sein, wobei die dicke Tropfenseite der Außenseite des Ständerbleches zugewandt ist.

Bei einer bevorzugten Ausführungsform kann das Gehäuse des Antriebsmotors ortsfest an dem Fahrzeug angebracht sein und der Rotor auf einer Welle, insbesondere Hohlwelle sitzen, die ihrerseits über ein Getriebe, insbesondere ein Differential mit wenigstens einer Antriebswelle für das Fahrzeug verbunden ist. Dabei kann der Antriebsmotor integraler Bestandteil der Antriebsachse sein, so daß Antriebsmotor und Antriebsachse eine Einheit bilden und sowohl Baugröße als auch Gewicht reduziert werden.

Weiterhin kann jeweils ein Antriebsmotor einem Antriebsrad als Direktantrieb zugeordnet sein, so daß eine Antriebskonstruktion mit Differential und Antriebswelle entfällt. Dabei können die beiden Antriebsmotoren über ein elektronisches Differential gesteuert werden, wobei eine Steuerung die Motordrehzahlen in Abhängigkeit von Lenkeinschlag und Fahrzeuggeschwindigkeit regelt.

Bei einer bevorzugten Ausführungsform kann der Antriebsmotor frequenzgesteuert sein. Weiterhin kann der Antriebsmotor im Bremsbetrieb Energie in die Stromquelle zurückspeisen.

Außerdem kann ein von einem elektrischen Motor angetriebener Hubmast vorgesehen sein, wobei der elektrische Motor beim Absenken des Hubmastes Energie in die Stromquelle zurückspeisen kann.

Im folgenden wird ein in der Zeichnung dargestelltes Ausführungsbeispiel der Erfindung erläutert. Es zeigen:
- Fig. 1: eine Draufsicht auf den vorderen Bereich eines Gabelstaplers und
- Fig. 2: einen Ausschnitt aus Rotorblech und Ständerblech eines Asynchronmotors.

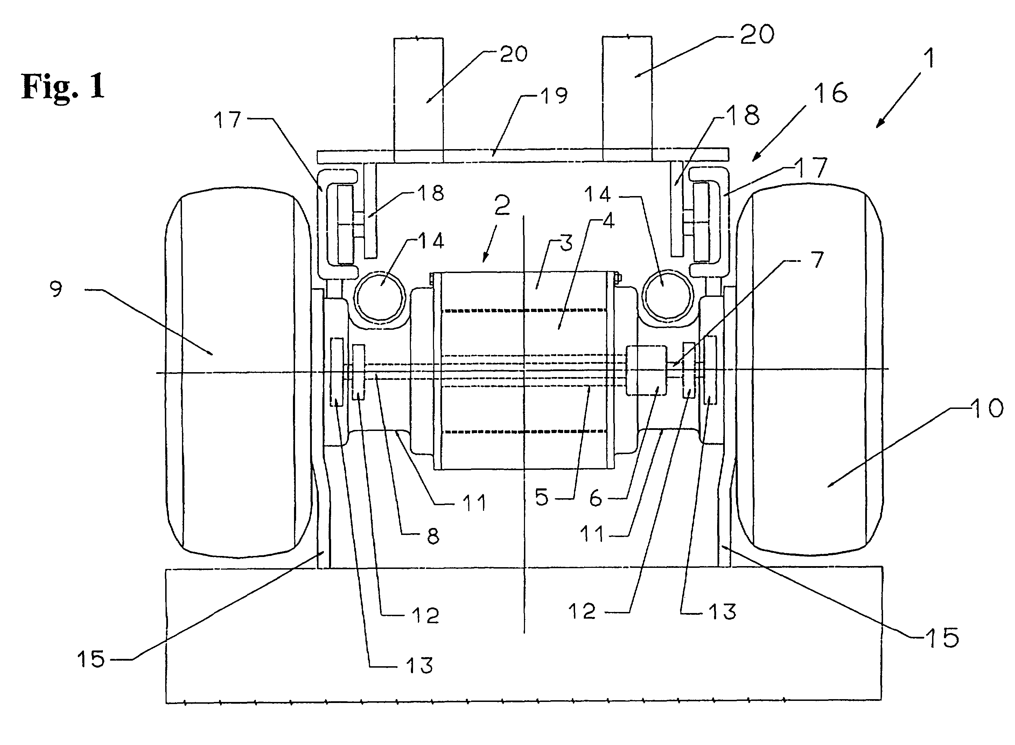

Figur 1 zeigt eine Draufsicht auf den vorderen Bereich eines Gabelstaplers 1, der als Antriebsmotor einen Asynchronmotor 2 mit einem Stator 3 und einem Rotor 4 aufweist. Der Rotor 4 sitzt dabei auf einer Hohlwelle 5, die die Drehbewegung des Rotors 4 über ein Differential 6 an Antriebswellen 7, 8 weiterleitet. Da das Differential 6 seitlich des Asynchronmotors 2 gelagert ist, läuft die Antriebswelle 8 als Steckwelle durch die Hohlwelle 5 zu einem auf der anderen Seite befestigten Rad 9, während die Antriebswelle 7 direkt zu einem gegenüber befindlichen Rad 10 führt.

Der Asynchronmotor 2 ist mit den Rädern 9, 10 über mit Öl gefüllte Übergangsstücke 11 verbunden, in denen die Antriebswellen 7, 8 jeweils mit einer Lamellenbremse 12 und einem Planetengetriebe 13 verbunden sind. Weiterhin ist auch das Differential 6 in einem der Übergangsstücke 11 angeordnet. Die Übergangsstücke 11 weisen eine umlaufende Ausbuchtung für Hubzylinder 14 auf. Radseitig sind die Übergangsstücke 11 zum Gabelstapler 1 hin mit dem Fahrgestell 15 verbunden.

Auf der dem Gabelstapler 1 abgewandten Seite der Übergangsstücke 11 ist ein Hubmast 16, bestehend aus einem äußeren Rahmen 17 sowie einem darin beweglich gelagerten inneren Rahmen 18, befestigt. An dem inneren Rahmen 18 sind über einen Gabelträger 19 Gabeln 20 vorgesehen.

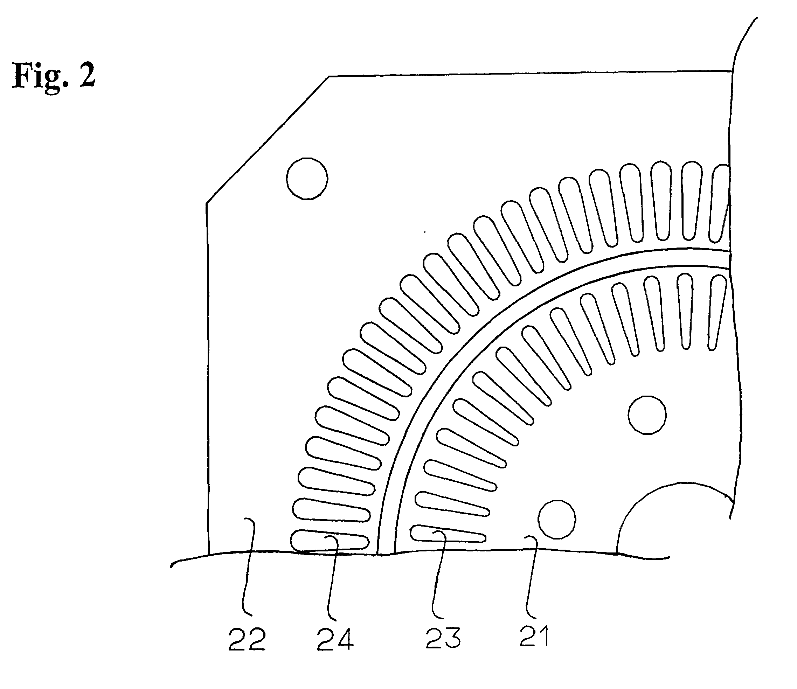

Fig. 2 zeigt einen Ausschnitt aus Rotorblech 21 und Ständerblech 22 des elektrischen Antriebsmotors. Die Nuten 23 des Rotorbleches 21 sind tropfenförmig, wobei die dicke Tropfenseite der Außenseite des Rotorbleches 21 zugewandt ist. Die Nuten 24 des Ständerbleches 22 sind ebenfalls tropfenförmig. Die dicke Tropfenseite ist der Außenseite des Ständerbleches 22 zugewandt.

## Patentansprüche

1. Fahrzeug mit elektrischem Antriebsmotor und einer Stromquelle, insbesondere als Flurförderzeug, mit einer Stromquellenspannung von weniger als 96 Volt, wobei der Antriebsmotor ein Asynchronmotor (2) mit einem Rotor (4) mit Rotorblechen (21) und einem Stator (3) mit Ständerblechen (22) ist und mehr als vier Pole hat, dadurch gekennzeichnet, daß der Antriebsmotor mehr als 54 Nuten im Ständerblech aufweist und der Effektivwert der Motorspannung geringer als 60 Volt Wechselspannung ist und daß der Antriebsmotor phasenüberlappend in zwei Schichten gewickelt ist und einen verkürzten Wickelschritt aufweist.

2. Fahrzeug nach Anspruch 1, dadurch gekennzeichnet, daß die Nuten (23) des Antriebsmotors im Rotorblech (21) tropfenförmig und wenigstens stromverdrängungsarm sind, wobei die dicke Tropfenseite der Außenseite des Rotorbleches (21) zugewandt ist.

3. Fahrzeug nach Anspruch 1 oder 2 , dadurch gekennzeichnet, daß die Nuten (24) im Ständerblech (22) des Antriebsmotors tropfenförmig und wenigstens stromverdrängungsarm sind, wobei die dicke Tropfenseite der Außenseite des Ständerbleches (22) zugewandt ist.

4. Fahrzeug nach einem der Ansprüche 1 bis 3, dadurch gekennzeichnet, daß das Gehäuse des Antriebsmotors ortsfest an dem Fahrzeug angebracht ist und der Rotor (4) auf einer Welle, insbesondere Hohlwelle (5) sitzt, die ihrerseits über ein Getriebe, insbesondere ein Differential (6) mit wenigstens einer Antriebswelle (7, 8) für das Fahrzeug verbunden ist.

5. Fahrzeug nach einem der Ansprüche 1 bis 4, dadurch gekennzeichnet, daß der Antriebsmotor intergraler Bestandteil der Antriebsachse ist.

6. Fahrzeug nach einem der Ansprüche 1 bis 3, dadurch gekennzeichnet, daß jeweils ein Antriebsmotor als Direktantrieb einem Antriebsrad (9, 10) zugeordnet ist.

7. Fahrzeug nach Anspruch 6, dadurch gekennzeichnet, daß die beiden Antriebsmotoren über ein elektronisches Differential gesteuert werden.

8. Fahrzeug nach einem der Ansprüche 1 bis 7, dadurch gekennzeichnet, daß der Antriebsmotor frequenzgesteuert ist.

9. Fahrzeug nach einem der Ansprüche 1 bis 8, dadurch gekennzeichnet, daß der Antriebsmotor im Bremsbetrieb Energie in die Stromquelle zurückspeist.

10. Fahrzeug nach einem der Ansprüche 1 bis 9, dadurch gekennzeichnet, daß ein von einem elektrischen Motor angetriebener Hubmast (16) vorgesehen ist.

11. Fahrzeug nach Anspruch 10, dadurch gekennzeichnet, daß der elektrische Motor beim Absenken des Hubmastes (16) Energie in die Stromquelle zurückspeist.

## Claims

1. Vehicle having an electric drive motor and a current source, more especially serving as an industrial truck, with a current source voltage of less that 96 volts, the drive motor being an asynchronous motor (2) with a rotor (4) provided with rotor plates (21) and a stator (3) provided with stator plates (22) and having more than four poles, characterised in that the drive motor has more than 54 grooves in the stator plate, and the root-mean-square of the motor voltage is less than 60 volts alternating current voltage, and in that the drive motor is wound in two layers in a phase-overlapping manner and has a shortened winding pitch.

2. Vehicle according to claim 1, characterised in that the grooves (23) of the drive motor in the rotor plate (21) are teardrop-shaped and at least of low skin effect, the thick teardrop side facing the external side of the rotor plate (21).

3. Vehicle according to claim 1 or 2, characterised in that the grooves (24) in the stator plate (22) of the drive motor are teardrop-shaped and at least of low skin effect, the thick teardrop side facing the external side of the stator plate (22).

4. Vehicle according to one of claims 1 to 3, characterised in that the housing of the drive motor is spatially fixed on the vehicle, and the rotor (4) is mounted on a shaft, more especially hollow shaft (5), which in turn is connected, via a transmission, more especially a differential (6), to at least one drive shaft (7, 8) for the vehicle.

5. Vehicle according to one of claims 1 to 4, characterised in that the drive motor is an integral component of the drive axle.

6. Vehicle according to one of claims 1 to 3, characterised in that a respective drive motor is associated with each drive wheel (9, 10) as a direct drive means.

7. Vehicle according to claim 6, characterised in that the two drive motors are controlled via an electronic differential.

8. Vehicle according to one of claims 1 to 7, characterised in that the drive motor is frequency-controlled.

9. Vehicle according to one of claims 1 to 8, characterised in that the drive motor feeds-back energy to the current source in the braking operation.

10. Vehicle according to one of claims 1 to 9, characterised in that a lifting mast (16), driven by an electric motor, is provided.

11. Vehicle according to claim 10, characterised in that the electric motor feeds-back energy to the current source upon lowering of the lifting mast (16).

## Revendications

1. Véhicule avec un moteur d'entraînement électrique et une source d'alimentation électrique, notamment sous forme de chariot de manutention, avec une tension de la source d'alimentation inférieure à 96 Volts, le moteur d'entraînement étant un moteur asynchrone (2) avec un rotor (4) à tôle de rotor (21) et un stator (3) à tôle de stator (22), et possédant plus de quatre pôles, **caractérisé** en ce que le moteur d'entraînement présente plus de 54 rainures dans la tôle de stator et la valeur effective de la tension du moteur est inférieure à une tension alternative de 60 Volts, et en ce que le moteur d'entraînement est bobiné en deux couches en chevauchement de phase, et présente un pas de bobinage réduit.

2. Véhicule selon la revendication 1, **caractérisé** en ce que les rainures (23) du moteur d'entraînement dans la tôle de rotor (21) sont en forme de gouttes et au moins à faible effet pelliculaire, le côté épais des gouttes étant tourné vers le côté extérieur de la tôle de rotor (21).

3. Véhicule selon la revendication 1 ou 2, **caractérisé** en ce que les rainures (24) de la tôle de stator (22) du moteur d'entraînement sont en forme de gouttes et au moins à faible effet pelliculaire, le côté épais des gouttes étant tourné vers le côté extérieur de la tôle de stator (22).

4. Véhicule selon une des revendications 1 à 3, **caractérisé** en ce que le boîtier du moteur d'entraînement est installé fixement sur le véhicule et le rotor (4) est monté sur un arbre, notamment un arbre creux (5), qui est lui-même relié par l'intermédiaire d'une transmission, notamment d'un différentiel (6), à au moins un arbre d'entraînement (7, 8) pour le véhicule.

5. Véhicule selon une des revendications 1 à 4, **caractérisé** en ce que le moteur d'entraînement fait partie intégrante de l'essieu moteur.

6. Véhicule selon une des revendications 1 à 3, **caractérisé** en ce qu'un moteur d'entraînement respectif est associé comme entraînement direct à une roue motrice (9, 10).

7. Véhicule selon la revendication 6, **caractérisé** en ce que les deux moteurs d'entraînement sont commandés au moyen d'un différentiel électronique.

8. Véhicule selon une des revendications 1 à 7, **caractérisé** en ce que le moteur d'entraînement est commandé en fréquence.

9. Véhicule selon une des revendications 1 à 8, **caractérisé** en ce que le moteur d'entraînement, en service de freinage, ré-alimente la source d'alimentation électrique en énergie.

10. Véhicule selon une des revendications 1 à 9, **caractérisé** en ce qu'il est prévu un mât de levage (16) entraîné par un moteur électrique.

11. Véhicule selon la revendication 10, **caractérisé** en ce que le moteur électrique, lors de l'abaissement du mât de levage (16), ré-alimente la source d'alimentation électrique en énergie.
